# EUROPÄISCHE PATENTSCHRIFT

(11) **EP 3 172 815 B1**
(45) Veröffentlichungstag und Bekanntmachung des Hinweises auf die Patenterteilung: **19.12.2018**
(21) Anmeldenummer: 15735896.1
(22) Anmeldetag: 01.07.2015
(51) Int. Cl.: H02K 1/28

(54) **ROTOR FÜR EINEN ELEKTROMOTOR**
ROTOR FOR AN ELECTRIC MOTOR
ROTOR POUR MOTEUR ÉLECTRIQUE

(30) Priorität: 24.07.2014 DE 102014110439
(43) Veröffentlichungstag der Anmeldung: 31.05.2017
(73) Patentinhaber: ThyssenKrupp Presta TecCenter AG, 9492 Eschen (LI)
(72) Erfinder: PAUL, Daniel, 09235 Burkhardtsdorf (DE); MEUSEL, Jürgen, 09573 Dittmannsdorf (DE)
(74) Vertreter: thyssenkrupp Intellectual Property GmbH
(86) Internationale Anmeldenummer: PCT/EP2015/064926
(87) Internationale Veröffentlichungsnummer: WO 2016/012205

(56) Entgegenhaltungen:
- WO-A1-2011/136144
- JP-A- 2007 181 270
- US-A1- 2013 234 557

## Beschreibung

Die vorliegende Erfindung betrifft einen Rotor für einen Elektromotor mit einer Welle und mit mehreren Lamellen, die auf der Welle aufgenommen sind und wobei die Lamellen einen Innendurchgang aufweisen, durch den die Welle hindurchgeführt ist, so dass die Lamellen über den Innendurchgang auf der Welle zentriert sind. Weiterhin richtet sich die Erfindung auf einen Elektromotor mit einem solchen Rotor.

### STAND DER TECHNIK

Aus der DE 84 28 517 U1 ist ein Verfahren nach dem sogenannten Stanzpaketieren bekannt, um einen solchen Rotor für einen Elektromotor aus aufeinander gestapelten Blechen, nachfolgend Lamellen genannt, herzustellen. Der Rotor weist Blechlamellen auf, die in einer Paketanordnung auf einer Welle aufgebracht und drehmomentfest mit dieser verbunden werden. Hierfür weisen die Lamellen einen Innendurchgang auf, durch den die Welle des Rotors hindurchgeführt wird, so dass die Lamellen auf der Welle zentriert sind. Der Innendurchgang besitzt mehrere Bereiche in diskreten Umfangsabschnitten, durch die der Innendurchgang definiert wird, und die Bereiche sind als federnde Zungen ausgebildet. Wird die Welle durch den Innendurchgang der Lamellen geschoben, so federn die Zungen in Axialrichtung aus und können die Lamellen auf der Welle fixieren. Große Drehmomente zwischen den Lamellen und der Welle sind dabei jedoch nicht übertragbar, vielmehr dienen die elastischen, federnden Zungen einem Toleranzausgleich, und die Welle kann in die Lamellen eingedrückt werden, ohne dass die Gefahr eines metallischen Festsetzens, also eines "Fressens" besteht.

Die DE 10 2008 004 876 A1 lehrt eine weitere Ausgestaltung eines Rotors mit einer Welle und mehreren auf der Welle aufgebrachten Lamellen, und mit einem Ausführungsbeispiel wird die Möglichkeit aufgezeigt, die Lamellen auf die Welle aufzuschieben, wobei sich federnde Ansätze der Lamellen, die in den Innendurchgang der Lamellen hineinragen, in axialer Richtung elastisch verformen und Einkerbungen auf der Oberfläche der Welle erzeugen. Damit entsteht ein zumindest sehr kleiner Formschluss auch in Umfangsrichtung zwischen den elastischen Ansätzen der Lamellen und der Welle, wobei jedoch keine großen Drehmomente übertragen werden können.

Weiterhin wird die Möglichkeit erwähnt, dass die Befestigung der Lamellen auf der Welle durch eine zylindrische Presspassung ausgeführt werden kann, jedoch erfordert eine eng tolerierte Presspassung einen großen Bearbeitungsaufwand, so dass hohe Fertigungskosten entstehen.

Weiterhin empfiehlt die DE 10 2008 004 876 A1, dass die Welle eine Ausnehmung aufweist, in die der federnde Ansatz der Lamelle des Lamellenpaketes teilweise eingreift, so dass der Formschluss in der Umfangsrichtung zwischen den Lamellen und der Welle gebildet ist. Das soll eine kostengünstige Ausgestaltung des Formschlusses ermöglichen, eine spielfreie Übertragung von insbesondere wechsellastigen Drehmomenten kann damit jedoch ebenfalls nicht erzeugt werden, da eine elastische Verspannung nur in Axialrichtung erzeugt wird.

In der JP 2007 18 1270 ist das Erfordernis der Verwendung eines zusätzlichen Stiftes offenbart, welcher in eine entsprechende Aussparung, insbesondere in eine Bohrung eines rohrförmigen Elements, insbesondere eines elektromagnetischen Kerns einzubringen ist, um ein Auseinanderbiegen von Nasen des Elementes derart zu ermöglichen, dass es zu einer Verspannung des Elementes mit der Welle, insbesondere der Rotorwelle kommt. Zudem ist eine Fixierung des Stiftes innerhalb der Bohrung des Elementes beschrieben, welche das Austreten des Stiftes verhindern soll.

In der US2013/0234557A1 ist ebenfalls eine Anordnung einer Rotorwelle zu einem Joch (yoke) beschrieben. Dabei weist entweder das Joch in dessen Oberfläche der Durchgangsbohrung Aussparungen auf, in welche Vorsprünge der Rotorwelle, die sich an der Außenumfangsoberfläche der Rotorwelle erstrecken, eingreifen. Oder der Oberfläche der Durchgangsbohrung des Joches sind Vorsprünge ausgebildet, die sich folglich in Aussparungen am Außenumfang der Rotorwelle erstrecken. Folglich offenbart die US2013/0234557A1 eine grundlegend bekannte formschlüssige Welle-Nabe-Verbindung zwischen Joch und Rotorwelle.

### OFFENBARUNG DER ERFINDUNG

Aufgabe der Erfindung ist die Weiterbildung einer Verbindung zwischen einer Welle und auf der Welle aufgebrachten Lamellen zur Bildung eines Rotors für einen Elektromotor, wobei eine drehmomentübertragende, insbesondere starre Verbindung zwischen den Lamellen und der Welle erreicht werden soll. Insbesondere sollen dabei enge Toleranzen vermieden werden, um die Fertigungskosten des so gebildeten Rotors gering zu halten.

Diese Aufgabe wird ausgehend von einem Rotor für einen Elektromotor gemäß dem Oberbegriff des Anspruches 1 mit Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Lamellen im Innendurchgang ausgebildete Federzungen aufweisen, die mit einer Verspannungskraft in Umfangsrichtung mit wenigstens einer an der Welle ausgebildeten Gegengeometrie verspannt sind.

Durch eine erfindungsgemäße Verspannung der Federzungen in Umfangsrichtung wird der Vorteil erreicht, dass dem so gebildeten Formschluss ein Kraftschluss überlagert wird, so dass der Formschluss zur Übertragung sehr großer Drehmomente zwischen der Welle und den Lamellen dient, und die Verspannung der Federzungen an der Gegengeometrie ermöglicht eine in Umfangsrichtung spielfreie Verspannung der Lamellen auf der Welle. Auch bei einer Wechselbelastung in Umfangsrichtung, beispielsweise bei zu übertragenden Drehmomenten mit wechselnden Richtungen oder bei auftretenden Drehschwingungen, erfolgt kein Ausschlagen der Verbindung zwischen der Welle und den Lamellen. Dadurch, dass vorzugsweise mehrere Lamellen, jedoch nicht notwendigerweise alle Lamellen, Federzungen aufweisen, können über die Vielzahl der Federzungen große Drehmomente übertragen werden. Insbesondere erfolgt eine sehr feste in Umfangsrichtung wirkende Verspannung der Lamellen auf der Welle.

Die Lamellen können einzeln, in einer gemeinsamen stanzpaketierten Anordnung oder in mehreren stanzpaketierten Einheiten auf der Welle aufgebracht werden, wobei vorzugsweise die Mehrzahl der Lamellen und besonders bevorzugt alle Lamellen mit Federzungen in ihren Innendurchgang hineinragend ausgebildet sind.

Mit besonderem Vorteil können die Federzungen paarweise an den Lamellen ausgebildet sein und unter Aufbau der Verspannungskraft gegen die Gegengeometrie aufeinander zu oder voneinander weg gebogen werden. Erfindungsgemäß wird die Verspannungskraft dann in die Federzungen eingeleitet, wenn die Lamellen auf die Welle aufgeschoben werden. Dabei gelangen die Lamellen mit der Gegengeometrie in Kontakt und werden entsprechend verbogen, wobei das Verbiegen der Federzungen vorzugsweise elastisch oder zumindest überwiegend elastisch und gegebenenfalls mit einer plastischen Verformung erfolgt.

Gemäß einer ersten bevorzugten Ausführungsvariante kann die Gegengeometrie durch eine Nut in der Außenumfangsfläche der Welle gebildet sein. Dabei können die Federzungen in der Umfangsposition in den Innendurchgang hineinragen, und zwar kann die Position der Federzungen so gewählt werden, dass diese mit der Nut in der Welle übereinstimmt. Beispielsweise können auf dem Umfang verteilt vier insbesondere paarweise angeordnete Federzungen in diskreten Positionen auf dem Umfang ausgebildet sein und in den Innendurchgang hineinragen, wobei die Welle auf dem Außenumfang vier Nuten aufweist. Werden die Lamellen auf die Welle aufgeschoben, so müssen die Umfangspositionen der Federzungen mit den Umfangspositionen der Nuten übereinstimmen, so dass die Federzungen gegen die Nuten verspannt werden können.

Insbesondere können die Federzungen bei Anordnung der Lamellen auf die Welle in die Nut eingreifen und paarweise gegen die Seitenflanken der Nut verspannen. Sitzen die Lamellen in den Nuten ein, so können die Lamellen über den Durchmesser des Innendurchgangs auf der Welle zentriert werden. Ragen dabei die Federzungen in die Nut oder in die Nuten der Welle hinein, so können die Federzungen gegen die sich gegenüberliegenden Seitenflanken der Nut verspannen. Durch die paarweise Ausbildung der Federzungen können sich zwei Federzungen gegenüberstehen, und die Federzungen werden beispielsweise bei dem Eingreifen in die Nut so verbogen, dass diese beispielsweise unter elastischer Verformung aufeinander zu bewegt werden. Die Federzungen verspreizen sich damit in der Nut der Welle, und es können auf dem Umfang verteilt mehrere Paare von Federzungen in jeweils zugeordneten Nuten eingreifen.

Gemäß einer weiteren vorteilhaften Ausführungsvariante kann die Gegengeometrie auch durch ein Mitnehmerprofil gebildet werden, das auf der Außenumfangsfläche der Welle aufsitzt. Beispielsweise kann das Mitnehmerprofil als eine Art Passfeder ausgeführt werden, so dass sich das Mitnehmerprofil radial über der Außenumfangsfläche der Welle heraus erstreckt. Die Federzungen können in der Umfangsposition in der Kontur des Innendurchgangs zurückversetzt ausgebildet sein, und werden die Lamellen auf die Welle aufgeschoben, so kann das wenigstens eine Mitnehmerprofil auf der Welle in den Bereich der zurückversetzten Federzungen eingreifen.

Bei Anordnung der Lamellen auf der Welle kann damit das Mitnehmerprofil zwischen zwei Federzungen einsitzen, so dass die Federzungen paarweise gegen die Seitenflanken des Mitnehmerprofils verspannen. Insbesondere werden die paarweise angeordneten Federzungen voneinander weg gebogen, so dass diese folglich aufspreizen.

Bei Aufbau der Verspannungskraft der Federzungen gegen die Gegengeometrie können die Federzungen an der Lamelle in Umfangsrichtung elastisch oder zumindest überwiegend elastisch rückfedern. Jedoch kann auch vorgesehen sein, die Gegengeometrie derart zu bemaßen, das die Federzungen einen elastischen Bereich durchlaufen und auch einen plastischen Verformungsbereich aufweisen, wenn die Lamellen auf der Welle aufgeschoben sind.

Nach einer bevorzugten Ausgestaltung der Federzungen an der Lamelle kann diese laschenartig oder zahn- oder zackenartig ausgeführt sein. Beispielsweise kann die Federzunge sich zu ihrer Spitze hin verjüngen, und/oder zu ihrer Spitze hin eine geringere Dicke aufweisen.

Die paarweise Anordnung der Federzungen ist dadurch bestimmt, dass eine erste Federzunge in einer ersten Umfangsrichtung zurück federt und eine weitere Federzunge, die der ersten Federzunge zugeordnet ist, federt in eine entgegengesetzte Umfangsrichtung zurück. Dabei müssen die paarweise angeordneten Federzungen nicht zwingend nebeneinander am Innenumfang des Innendurchgangs angeordnet sein und es können die Federzungen sich auch paarweise überschneiden.

Insbesondere kann zwischen den an der Lamelle paarweise angeordneten Federzungen, wenn diese benachbarte Federpaare bilden, ein Freischnitt ausgebildet sein, so dass durch den Freischnitt ein vergrößerter elastischer Verformungsbereich der Federzungen gebildet wird. Mit weiterem Vorteil können auch rückseitig der an der Lamelle paarweise angeordneten Federzungen Freischnitte ausgebildet sein, so dass die Federzungen über eine durch die Freischnitte tiefer liegende Wurzeln einen längeren elastischen Bereich aufweisen. Dadurch kann die Federelastizität der Federzungen an der Kontur des Innendurchgangs der Lamellen vergrößert werden.

Werden die Lamellen auf die Welle aufgeschoben, so müssen diese zunächst über ein Ende der Welle auf diese aufgefädelt werden. Hierfür kann die Nut, die gemäß der ersten Ausführungsvariante die Gegengeometrie an der Welle bilden kann, endseitig einen Einführabschnitt aufweisen, der in Umfangsrichtung breiter ausgebildet ist als die Nut, und der Einführabschnitt kann sich bis zum Übergang in die Nut verjüngen. Dadurch wird das Aufschieben der Lamellen auf die Welle erleichtert, und die Federzungen können in den Einführabschnitt hinein gleiten und sich über diesem Einführabschnitt fortschreitend verformen. Insbesondere können sich die Federzungen über dem Einführabschnitt paarweise aufeinander zu oder voneinander weg verbiegen.

Ist die Gegengeometrie als Mitnehmerprofil ausgebildet, kann dieses in vergleichbarer Weise und mit vergleichbarer Funktion ebenfalls einen endseitigen Einführabschnitt aufweisen, der in Umfangsrichtung schmaler ausgebildet ist als das Mitnehmerprofil selbst und dieser kann sich verbreiternd in das Mitnehmerprofil übergehen.

Die Einführabschnitte am Ende der Nut oder am Ende des Mitnehmerprofils führen zu dem Vorteil, dass für die Verformung der Federzungen in Umfangsrichtung kein Werkzeug erforderlich ist. Die Federzungen müssen durch die Einführabschnitte nicht erst mit einem Werkzeug zusammen- oder auseinandergedrückt werden, damit diese in die Nut oder auf das Mitnehmerprofil ein- oder aufgefädelt werden können.

Die Erfindung richtet sich weiterhin auf einen Elektromotor mit einem Rotor, aufweisend eine Welle und mehrere Lamellen, die auf der Welle aufgenommen sind und wobei die Lamellen einen Innendurchgang aufweisen, durch den die Welle hindurchgeführt ist, so dass die Lamellen durch den Innendurchgang auf der Welle zentriert sind. Erfindungsgemäß weisen die Lamellen im Innendurchgang ausgebildete Federzungen auf, die mit einer Verspannungskraft in Umfangsrichtung mit wenigstens einer an der Welle ausgebildeten Gegengeometrie verspannt sind.

### BEVORZUGTE AUSFÜHRUNGSVARIANTEN DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht einer Lamelle mit erfindungsgemäß ausgestalteten Federzungen, die in den Innendurchgang der Lamelle hineinragen,
- Figur 2: eine Welle mit einer Gegengeometrie, die in Form einer Nut ausgebildet ist, so dass die in Figur 1 gezeigte Lamelle auf der mit Nuten ausgebildeten Welle aufgeschoben werden kann,
- Figur 3: eine Ansicht einer Lamelle gemäß Figur 1 in Anordnung auf einer Welle gemäß Figur 2,
- Figur 4: eine Detailansicht von paarweise im Innendurchgang einer Lamelle angeordneten Federzungen in einem nicht gebogenen und in einem gebogenen Zustand,
- Figur 5: eine weitere Ausführungsvariante von paarweise angeordneten Federzungen im Innendurchgang einer Lamelle mit Freischnitten,
- Figur 6: eine Ansicht einer Welle mit einer Nut, die im Endbereich einen Einführabschnitt aufweist,
- Figur 7: eine weitere Ausgestaltung einer Nut nach Art einer Schwalbenschwanzführung,
- Figur 8: eine weitere Ausführungsvariante einer Welle mit Gegengeometrien, die nach Art eines Mitnehmerprofils ausgebildet sind,
- Figur 9: eine Lamelle mit Federzungen, die zurückversetzt im Innendurchgang der Lamelle ausgebildet sind,
- Figur 10: eine weitere Ausführungsvariante einer Lamelle und einer Welle in einer ausschnittsweisen Darstellung, wobei die Federzungen wechselseitig in einer ersten und in zweiten Umfangsrichtung ausgebildet sind und
- Figur 11: die Ausführungsvariante der Lamelle gemäß Figur 10 in Anordnung auf einer Welle gemäß Figur 10.

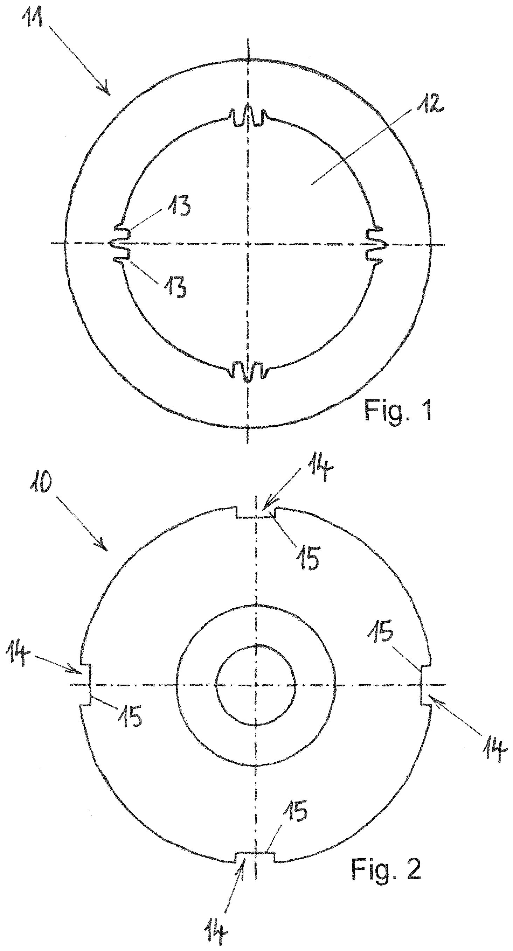

In Figur 1 ist in einer Seitenansicht eine Lamelle 11 gezeigt, die mit einem Innendurchgang 12 ausgebildet ist. Die Lamelle 11 kann aus einem dünnen Blech ausgebildet sein und mehrere Lamellen 11 können auf einer Welle 10 zur Bildung eines Rotors für einen Elektromotor vorgesehen werden.

In der Innenkontur des Innendurchgangs 12 sind mehrere Federzungen 13 ausgebildet. Die Federzungen 13 ragen in den Innendurchgang 12 hinein und stehen damit über der Innenkontur hervor. Die Federzungen 13 sind paarweise an diskreten Umfangspositionen in der Innenkontur des Innendurchgangs 12 ausgebildet, und das Beispiel zeigt vier Umfangspositionen, an denen jeweils zwei Federzungen 13 vorhanden sind.

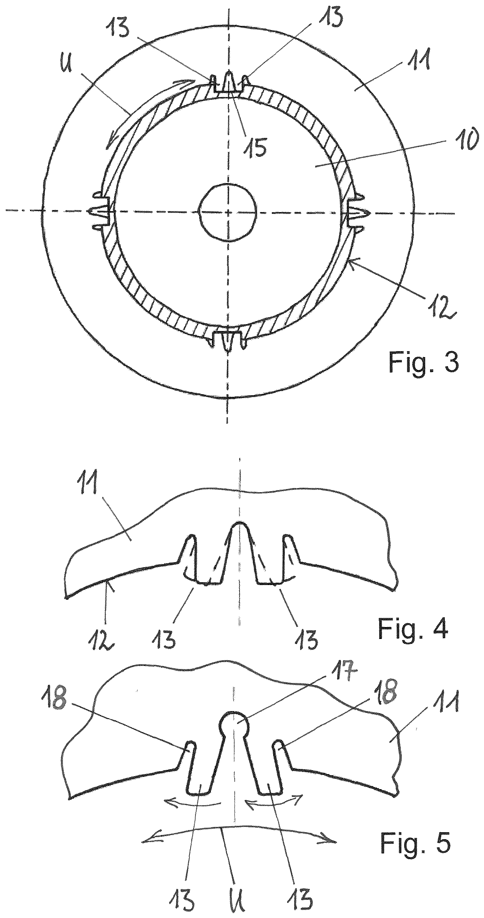

Figur 2 stellt eine Welle 10 dar, die aus der Richtung ihrer Wellenachse gezeigt ist. In der Welle sind vier Gegengeometrien 14 eingebracht, die als Nuten 15 ausgebildet sind. Die Nuten 15 weisen einen im Wesentlichen rechteckigen Querschnitt auf und verlaufen achsparallel zur Achse der Welle 10. Somit können die Lamellen 11 gemäß Figur 1 aus Richtung der Wellenachse auf die Welle 10 aufgeschoben werden, so dass die Anordnung der Lamellen 11 auf der Welle 10 gemäß Figur 3 gebildet werden kann.

Wie in Figur 3 gezeigt, können bei einem Aufschieben der Lamellen 11 auf der Welle 10 die Lamellen 11 über ihren Innendurchgang 12 auf dem Außenumfang der Welle 10 zentriert werden. Zugleich können die Federzungen 13 in die Nuten 15 eingreifen, derart, dass die Federzungen 13 unter elastischer Rückfederung aufeinander zu gebogen werden. Dadurch liegen die Federzungen an den innenliegenden Seitenflanken der Nut 15 an und verspannen in dieser. Das Rückfedern der Federzungen 13 in ihrer paarweisen Anordnung erfolgt derart, dass die Federzungen 13 und damit die Lamelle 11 auf der Welle 10 in Umfangsrichtung U verspannen und so einen Formschluss bilden, der in Umfangsrichtung durch einen Kraftschluss überlagert wird. Im Ergebnis kann die Lamelle 11 über ihren Innendurchgang 12 zentriert auf der Welle 10 aufgebracht werden, wobei zugleich ein umkehrspielfreies Übertragen von Drehmomenten in wechselweiser Richtung zwischen der Lamelle 11 und der Welle 10 möglich wird.

Figur 4 zeigt Federzungen 13 in der Innenkontur eines Innendurchgangs 12 einer Lamelle 11. Dabei sind die Federzungen 13 mit einer durchgehend dargestellten Kontur belastet dargestellt und damit aufeinander zu gebogen, und in der gestrichelt dargestellten Kontur sind die Federzungen 13 in einer unbelasteten Anordnung gezeigt, die sich dann einstellt, wenn die Lamelle 11 nicht auf der Welle 10 aufgeschoben ist. Aus der Darstellung wird deutlich, dass gemäß Figur 3 die Federzungen 13 paarweise aufeinander zu gebogen werden, wenn sich die Federzungen 13 in der Nut 15 befinden und gegen die Seitenflanken der Nut 15 anliegen.

Figur 5 zeigt in einer abgewandelten Form eine Ausbildung von Federzungen 13, wobei sich zwischen den paarweise angeordneten Federzungen 13 ein Freischnitt 17 befindet. Rückseitig der an der Lamelle 11 paarweise angeordneten Federzungen 13 befinden sich Freischnitte 18. Durch die Freischnitte 17 und 18 wird die federelastische Anordnung der Federzungen 13 an der Lamelle 11 verbessert, so dass diese einen vergrößerten federelastischen Bereich aufweisen. Die federelastische Beweglichkeit der Federzungen 13 ist in Bezug auf die Umfangsrichtung U durch Doppelpfeile gezeigt.

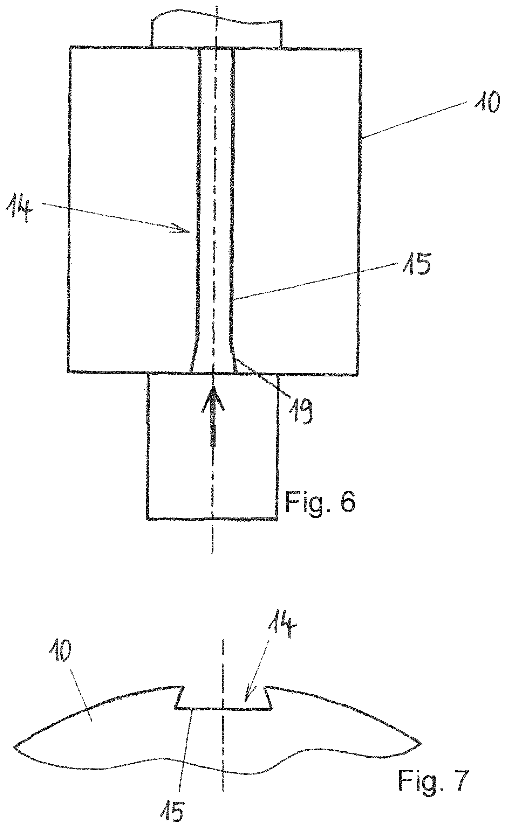

In Figur 6 ist eine Welle 10 eines Rotors für einen Elektromotor mit einer Nut 15 zur Bildung der Gegengeometrie 14 gezeigt. An einer Endseite besitzt die Nut 15 einen Einführabschnitt 19, und über den Einführabschnitt 19 können die Lamellen 11 auf die Welle 10 aufgeschoben werden, wobei die Aufschubrichtung der Lamellen 11 durch einen Pfeil angedeutet ist. Beim Aufschieben der Lamellen 11 können die Federzungen 13 über den Einführabschnitt 19 in die Nut 15 eingefädelt werden. Hierfür weist der Einführabschnitt 19 eine sich in Richtung zur Nut 15 verjüngende Breite auf. Beim Durchfahren des Einführabschnittes 19 werden die Federzungen 13 aufeinander zu bewegt, so dass diese in eine Position übergehen, wie mit der gestrichelt dargestellten Position der Federzungen 13 in Figur 4 übergehend in die durchgehend dargestellte Kontur der Federzungen 13 gezeigt.

Figur 7 zeigt die Ausgestaltung einer Gegengeometrie 15 in der Außenumfangsfläche in der Welle 10, und die Gegengeometrie 15 ist als leicht abgewandelte Nut 15 mit einer Schwalbenschwanzkontur dargestellt. Durch die Schwalbenschwanzkontur kann ein verbesserter Formschluss zwischen den Federzungen 13 und der Nut 15 erreicht werden, wenn diese in der Nut 15 einsitzen.

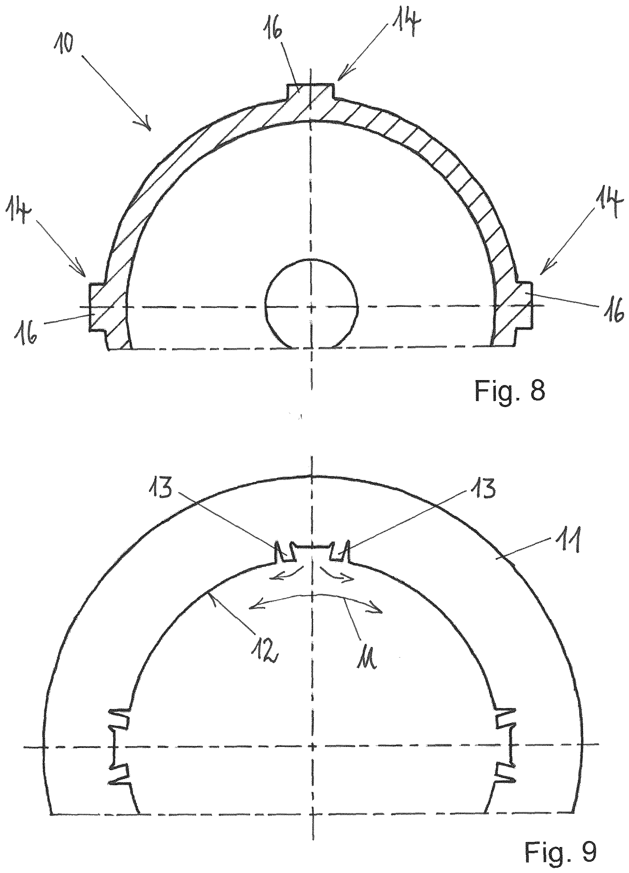

Figur 8 zeigt eine weitere Ausführungsvariante einer Welle 10 mit Gegengeometrien 14, die als Mitnehmerprofile 16 ausgestaltet sind. Wird eine Lamelle 11 gemäß Figur 9, die mit paarweise angeordneten Federzungen 13 ausgebildet ist, die zurückversetzt in Richtung zum Innendurchgang 12 weisen, auf die Welle 10 gemäß der Ausführungsvariante aus Figur 8 aufgeschoben, so biegen die Federzungen 13 zueinander auf, wie durch die beiden Pfeile in Figur 9 dargestellt. Sitzt die Lamelle 11 zentriert über ihren Innendurchgang 12 auf der Welle 10 auf, so fassen die Federzungen 13 das überstehende Mitnehmerprofil 16 ein, und die Federzungen 13 drücken unter federelastischer Vorspannung gegen die Seitenflanken des Mitnehmerprofils 16 an. Dadurch wird die Lamelle 11 in Umfangsrichtung U auf der Welle 10 verspannt.

Der in Zusammenhang mit dem ersten Ausführungsbeispiel gemäß Figur 6 beschriebene Einführabschnitt 19 kann auch in der Variante der Gegengeometrie 14, wie in der Figur 8 gezeigt, vorgesehen werden, und das Mitnehmerprofil 16 kann auf nicht näher gezeigte Weise ebenfalls einen endseitigen Einführabschnitt aufweisen.

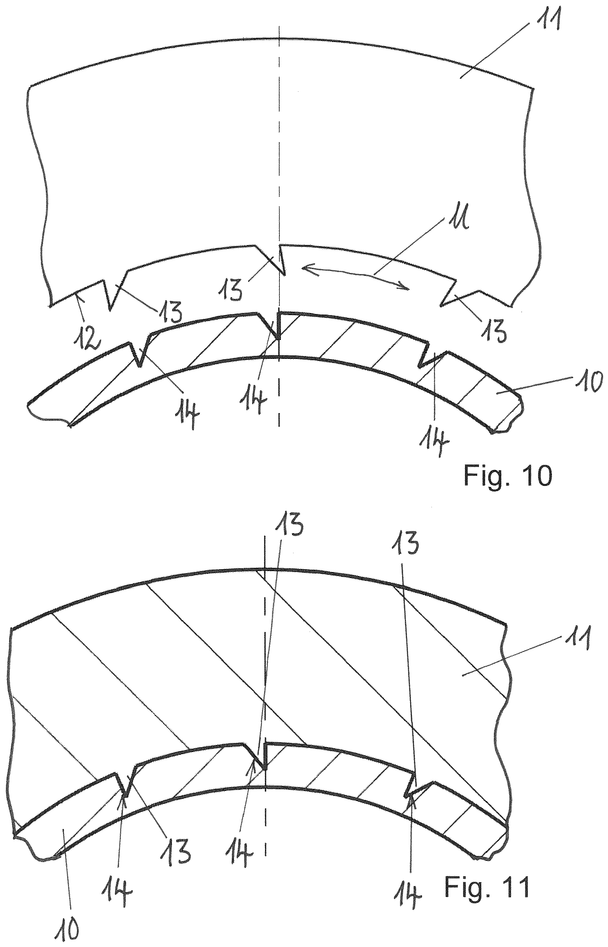

Schließlich zeigt Figur 10 noch eine weitere Ausführungsvariante zur Anordnung einer Lamelle 11 auf einer Welle 10, wobei die Federzungen 13 zackenartig ausgeführt sind und benachbarte Federzungen 13, die in den Innendurchgang 12 der Lamelle 11 hineinragen, weisen wechselseitig in entgegengesetzte Richtungen. Die Welle 10 ist mit Gegengeometrien 14 gezeigt, die an die zackenartig ausgeführten Federzungen 13 angepasst sind, wobei bei einem Aufschieben der Lamelle 11 auf die Welle 10 die Federzungen 13 unter leichter Rückfederung in die Gegengeometrien 14 eingreifen, wie in Figur 11 gezeigt.

Das Ausführungsbeispiel gemäß den Figuren 10 und 11 führt eine Variante auf, gemäß der die Federzungen 13, die paarweise verbogen und mit- bzw. gegeneinander verspannt werden, nicht benachbart zueinander an einer diskreten Umfangsposition an dem Innendurchgang 12 der Lamelle 11 ausgebildet sind.

Das Rückfedern der Federzungen 13 in Umfangsrichtung U erzeugt ein Gegenmoment der Lamelle 11 um die Mittelachse der Welle 10, so dass wenigstens eine weitere Federzunge 13 in einer entgegengesetzten Richtung rückfedern muss. So können beispielsweise die gezeigten außenliegenden Federzungen 13 gegeneinander verspannen, wobei die mittig gezeigte Federzunge in die Gegengeometrie 14 auf der Welle 10 eingreift und mit einer nicht dargestellten weiteren Federzunge 13 einen Drehmomentausgleich erzeugt, wenn die Lamelle 11 auf die Welle 10 aufgeschoben wird.

### Bezugszeichenliste

- 10: Welle
- 11: Lamelle
- 12: Innendurchgang
- 13: Federzunge
- 14: Gegengeometrie
- 15: Nut
- 16: Mitnehmerprofil
- 17: Freischnitt
- 18: Freischnitt
- 19: Einführabschnitt

- U: Umfangsrichtung

## Patentansprüche

1. Rotor für einen Elektromotor mit einer Welle (10) und mit mehreren Lamellen (11), die auf der Welle (10) aufgenommen sind und wobei die Lamellen (11) einen Innendurchgang (12) aufweisen, durch den die Welle (10) hindurchgeführt ist, sodass die Lamellen (11) über den Innendurchgang (12) auf der Welle (10) zentriert sind,
**dadurch gekennzeichnet, dass** die Lamellen (11) im Innendurchgang (12) ausgebildete Federzungen (13) aufweisen, die mit einer in die Federzungen (13) beim Aufschieben der Lamellen (11) auf die Welle (10) eingeleiteten Verspannungskraft in Umfangsrichtung (U) mit wenigstens einer an der Welle (10) ausgebildeten Gegengeometrie (14) verspannt sind.

2. Rotor nach Anspruch 1, **dadurch gekennzeichnet, dass** die Federzungen (13) paarweise an den Lamellen (11) ausgebildet sind und unter Aufbau der Verspannungskraft gegen die Gegengeometrie (14) aufeinander zu oder voneinander weg gebogen werden.

3. Rotor nach Anspruch 1 oder 2, **dadurch gekennzeichnet, dass** die Gegengeometrie (14) durch eine Nut (15) in der Außenumfangsfläche der Welle (10) gebildet ist.

4. Rotor nach Anspruch 3, **dadurch gekennzeichnet, dass** die Federzungen (13) in der Umfangsposition in den Innendurchgang (12) hineinragen, in der die Nut (15) in der Welle (10) ausgebildet ist.

5. Rotor nach Anspruch 3 oder 4, **dadurch gekennzeichnet, dass** die Federzungen (13) bei Anordnung der Lamellen (11) auf der Welle (10) in die Nut (15) eingreifen und paarweise gegen die Seitenflanken der Nut (15) verspannen.

6. Rotor nach Anspruch 1 oder 2, **dadurch gekennzeichnet, dass** die Gegengeometrie (14) durch ein Mitnehmerprofil (16) gebildet ist, das auf der Außenumfangsfläche der Welle (10) aufsitzt.

7. Rotor nach Anspruch 6, **dadurch gekennzeichnet, dass** die Federzungen (13) in der Umfangsposition in der Kontur des Innendurchgangs (12) zurückversetzt ausgebildet sind, in der das Mitnehmerprofil (16) auf der Welle (10) aufsitzt.

8. Rotor nach Anspruch 6 oder 7, **dadurch gekennzeichnet, dass** bei Anordnung der Lamellen (11) auf der Welle (10) das Mitnehmerprofil (16) zwischen zwei Federzungen (13) einsitzt, sodass die Federzungen (13) paarweise gegen die Seitenflanken des Mitnehmerprofils (16) verspannen.

9. Rotor nach einem der vorgenannten Ansprüche, **dadurch gekennzeichnet, dass** bei Aufbau der Verspannungskraft der Federzungen (13) gegen die Gegengeometrie (14) die Federzungen (13) an der Lamelle (11) in Umfangsrichtung elastisch rückfedern.

10. Rotor nach einem der vorgenannten Ansprüche, **dadurch gekennzeichnet, dass** zwischen den an der Lamelle (11) paarweise angeordneten Federzungen (13) ein Freischnitt (17) ausgebildet ist und/oder dass rückseitig der an der Lamelle (11) paarweise angeordneten Federzungen (13) ein Freischnitt (18) ausgebildet ist.

11. Rotor nach einem der Ansprüche 3 bis 10, **dadurch gekennzeichnet, dass** die Nut (15) endseitig einen Einführabschnitt (19) aufweist, der in Umfangsrichtung breiter ausgebildet ist als die Nut (15) selbst und der sich verjüngend in die Nut (15) übergeht und/oder dass das Mitnehmerprofil (16) einen Einführabschnitt aufweist, der in Umfangsrichtung schmaler ausgebildet ist als das Mitnehmerprofil (16) selbst und der sich verbreiternd in das Mitnehmerprofil (16) übergeht.

12. Elektromotor mit einem Rotor, aufweisend eine Welle (10) und mehrere Lamellen (11), die auf der Welle (10) aufgenommen sind und wobei die Lamellen (11) einen Innendurchgang (12) aufweisen, durch den die Welle (10) hindurchgeführt ist, sodass die Lamellen (11) über den Innendurchgang (12) auf der Welle (10) zentriert sind,
**dadurch gekennzeichnet, dass** die Lamellen (11) im Innendurchgang (12) ausgebildete Federzungen (13) aufweisen, die mit einer in die Federzungen (13) beim Aufschieben der Lamellen (11) auf die Welle (10) eingeleiteten Verspannungskraft in Umfangsrichtung (U) mit wenigstens einer an der Welle (10) ausgebildeten Gegengeometrie (14) verspannt sind.

## Claims

1. Rotor for an electric motor having a shaft (10) and having a plurality of disks (11) which are received on the shaft (10), and the disks (11) having an inner passage (12), through which the shaft (10) is guided, with the result that the disks (11) are centered on the shaft (10) via the inner passage (12), **characterized in that** the disks (11) have spring tongues (13) which are configured in the inner passage (12) and are braced with a bracing force, which is introduced into the spring tongues (13) when the disks (11) are pushed onto the shaft (10), in the circumferential direction (U) against at least one mating geometry (14) which is configured on the shaft (10) .

2. Rotor according to in Claim 1, **characterized in that** the spring tongues (13) are configured in pairs on the disks (11) and are bent toward one another or away from one another during the build-up of the bracing force against the mating geometry (14).

3. Rotor according to in Claim 1 or 2, **characterized in that** the mating geometry (14) is formed by way of a groove (15) in the outer circumferential face of the shaft (10).

4. Rotor according to in Claim 3, **characterized in that**, in the circumferential position, the spring tongues (13) protrude into the inner passage (12), in which the groove (15) in the shaft (10) is configured.

5. Rotor according to in Claim 3 or 4, **characterized in that**, when the disks (11) are arranged on the shaft (10), the spring tongues (13) engage into the groove (15) and are braced in pairs against the side flanks of the groove (15).

6. Rotor according to in Claim 1 or 2, **characterized in that** the mating geometry (14) is formed by way of a driver profile (16) which is seated on the outer circumferential face of the shaft (10).

7. Rotor according to in Claim 6, **characterized in that**, in the circumferential position, the spring tongues (13) are configured so as to be set back in the contour of the inner passage (12), in which the driver profile (16) is seated on the shaft (10).

8. Rotor according to in Claim 6 or 7, **characterized in that**, when the disks (11) are arranged on the shaft (10), the driver profile (16) is seated between two spring tongues (13), with the result that the spring tongues (13) are braced in pairs against the side flanks of the driver profile (16).

9. Rotor according to in one of the preceding claims, **characterized in that**, during the build-up of the bracing force of the spring tongues (13) against the mating geometry (14), the spring tongues (13) on the disk (11) spring back elastically in the circumferential direction.

10. Rotor according to in one of the preceding claims, **characterized in that** a cutout (17) is configured between the spring tongues (13) which are arranged in pairs on the disk (11), and/or **in that** a cutout (18) is configured on the rear side of the spring tongues (13) which are arranged in pairs on the disk (11).

11. Rotor according to in one of Claims 3 to 10, **characterized in that**, on the end side, the groove (15) has an insertion section (19) which is of broader configuration in the circumferential direction than the groove (15) itself and which merges in a tapering manner into the groove (15), and/or **in that** the driver profile (16) has an insertion section which is of narrower configuration in the circumferential direction than the driver profile (16) itself and which merges in a widening manner into the driver profile (16).

12. Electric motor with a rotor, having a shaft (10) and a plurality of disks (11) which are received on the shaft (10), and the disks (11) having an inner passage (12), through which the shaft (10) is guided, with the result that the disks (11) are centered on the shaft (10) via the inner passage (12), **characterized in that** the disks (11) have spring tongues (13) which are configured in the inner passage (12) and are braced with a bracing force, which is introduced into the spring tongues (13) when the disks (11) are pushed onto the shaft (10), in the circumferential direction (U) against at least one mating geometry (14) which is configured on the shaft (10).

## Revendications

1. Rotor pour un moteur électrique comprenant un arbre (10) et comprenant plusieurs lamelles (11) qui sont accueillies sur l'arbre (10), les lamelles (11) possédant un passage interne (12) à travers lequel est passé l'arbre (10) de telle sorte que les lamelles (11) sont centrées sur l'arbre (10) par le biais du passage interne (12),
**caractérisé en ce que** les lamelles (11) possèdent des languettes flexibles (13) formées dans le passage interne (12), lesquelles sont calées avec au moins une géométrie homologue (14) formée sur l'arbre (10) avec une force de calage induite dans la direction périphérique (U) dans les languettes flexibles (13) lors de l'enfilage des lamelles (11) sur l'arbre (10).

2. Rotor selon la revendication 1, **caractérisé en ce que** les languettes flexibles (13) sont formées par paires sur les lamelles (11) et sont courbées les unes vers les autres ou les unes à l'opposé des autres en établissant la force de calage contre la géométrie homologue (14).

3. Rotor selon la revendication 1 ou 2, **caractérisé en ce que** la géométrie homologue (14) est formée par une rainure (15) dans la surface périphérique extérieure de l'arbre (10).

4. Rotor selon la revendication 3, **caractérisé en ce que** les languettes flexibles (13) font saillie dans la position périphérique dans le passage interne (12) dans laquelle est formée la rainure (15) dans l'arbre (10).

5. Rotor selon la revendication 3 ou 4, **caractérisé en ce que** les languettes flexibles (13) viennent en prise dans la rainure (15) lors de la disposition des lamelles (11) sur l'arbre (10) et se calent par paires contre les flancs latéraux de la rainure (15).

6. Rotor selon la revendication 1 ou 2, **caractérisé en ce que** la géométrie homologue (14) est formée par un profil d'entraînement (16) qui repose sur la surface périphérique extérieure de l'arbre (10).

7. Rotor selon la revendication 6, **caractérisé en ce que** les languettes flexibles (13) sont formées décalées en arrière dans la position périphérique dans le contour du passage interne (12) dans laquelle le profil d'entraînement (16) repose sur l'arbre (10).

8. Rotor selon la revendication 6 ou 7, **caractérisé en ce que** lors de la disposition des lamelles (11) sur l'arbre (10), le profil d'entraînement (16) est posé entre deux languettes flexibles (13), de sorte que les languettes flexibles (13) se calent par paires contre les flancs latéraux du profil d'entraînement (16).

9. Rotor selon l'une des revendications précédentes, **caractérisé en ce que** lors de l'établissement de la force de calage des languettes flexibles (13) contre la géométrie homologue (14), les languettes flexibles (13) subissent une flexion élastique en arrière au niveau de la lamelle (11) dans la direction périphérique.

10. Rotor selon l'une des revendications précédentes, **caractérisé en ce qu'**une découpe non guidée (18) est formée entre les languettes flexibles (13) disposées par paires au niveau de la lamelle (11) et/ou **en ce qu'**une découpe non guidée (18) est formée du côté arrière des languettes flexibles (13) disposées par paires au niveau de la lamelle (11).

11. Rotor selon l'une des revendications précédentes 3 à 10, **caractérisé en ce que** la rainure (15) possède, du côté de l'extrémité, une portion d'introduction (19) qui, dans la direction périphérique, est formée plus large que la rainure (15) elle-même et qui se transforme en la rainure (15) en se rétrécissant et/ou **en ce que** le profil d'entraînement (16) possède une portion d'introduction qui, dans la direction périphérique, est formée plus étroite que le profil d'entraînement (16) lui-même et qui se transforme en le profil d'entraînement (16) en s'élargissant.

12. Moteur électrique équipé d'un rotor, comprenant un arbre (10) et plusieurs lamelles (11) qui sont accueillies sur l'arbre (10), et les lamelles (11) possédant un passage interne (12) à travers lequel est passé l'arbre (10) de telle sorte que les lamelles (11) sont centrées sur l'arbre (10) par le biais du passage interne (12),
**caractérisé en ce que** les lamelles (11) possèdent des languettes flexibles (13) formées dans le passage interne (12), lesquelles sont calées avec au moins une géométrie homologue (14) formée sur l'arbre (10) avec une force de calage induite dans la direction périphérique (U) dans les languettes flexibles (13) lors de l'enfilage des lamelles (11) sur l'arbre (10).
